# EUROPEAN PATENT APPLICATION

(11) **EP 2 636 817 A2**
(43) Date of publication of application: **11.09.2013**
(21) Application number: 13154991.7
(22) Date of filing: 12.02.2013
(51) Int. Cl.: E04F 15/18

(54) **Subfloor component and method of manufacturing same**

(30) Priority: 05.03.2012 US 201213412038; 06.06.2012 US 201213489712
(71) Applicant: Amend, Victor, Toronto ON M2H 2E2 (CA)
(72) Inventor: Amend, Victor, Toronto ON M2H 2E2 (CA)
(74) Representative: Cottrill, Emily Elizabeth Helen

(57) **Abstract**

A subfloor component (10) includes an insulating foam panel (14) having first and second opposing faces and a plurality of intersecting grooves to define, in cross-section, a plurality of pedestals (17) having walls that extend into the panel from the first face toward the second face. The subfloor component also includes a moisture-resistant film (16) attached to the first face of the panel and that conforms to the pedestals, and a hardboard layer (12) on the second face of the panel. Methods of manufacturing subfloor components are also disclosed.

## Description

### Field of the Invention

The following is directed in general to building construction and renovation, and more particularly to a subfloor component and a method of manufacturing a subfloor component.

### Background of the Invention

A subfloor component is a panel or other component meant to be placed on top of a concrete floor or other foundation before a finished floor of, for example, hardwood or tile is installed. The subfloor component may have projections for permitting the flow of moisture underneath the component so as to prevent moisture from standing underneath the subfloor component and causing problems with mold. While subfloor components of varying types are known, improvements are desirable.

### Summary of the Invention

According to an aspect, there is provided a subfloor component comprising an insulating foam panel having first and second opposing faces and a plurality of intersecting grooves to define, in cross-section, a plurality of pedestals having walls that extend into the panel from the first face toward the second face; a moisture-resistant film attached to the first face of the panel and that conforms to the pedestals; and a hardboard layer on the second face of the panel.

Advantageously, the subfloor component has a moisture-resistant film that conforms to the pedestals of the panel, such the when the pedestals are facing downwards against, for example, a concrete floor, moisture can travel along the concrete floor between the pedestals (ie. along channels formed by the grooves of the panel and the concrete floor) without seeping into the foam of the panel itself.

Enabling the moisture to travel along the channels enables drainage of the moisture that is on the concrete floor below the panel towards the edges of the panels, rather than form standing-water puddles on the concrete floor.

The attaching of the moisture-resistant film to the pedestals of the panel provides structural integrity to particularly the foam pedestals of the panel. Thus, while a subfloor component is being transported, or while the subfloor component is being compressed against, for example, a concrete floor during normal use, pieces of foam do not tend to break loose of the panel. In other words, the moisture-resistant film, in addition to preventing ingress of moisture into the panel, tends to keep the foam pedestals intact.

The hardboard layer on the second surface of the panel provides a flat, integrated surface upon which to overlay further flooring made of wood, linoleum, ceramic, stone, cork, bamboo, eucalyptus or other material. The hardboard layer against the foam panel provides the combination of flatness, impact-absorption, sound absorption, insulation and resiliency suited well for floors in dwellings.

Multiple subfloor components may be installed on a concrete floor simply by setting them down on a concrete floor adjacent to each other, or even somewhat spaced from each other. The subfloor components may be interconnected to provide an overall more uniform surface flatness across subfloor components and discourage shifting of the subfloor components. This can be useful for overlaying further flooring. Structures for interconnecting subfloor components may be employed.

The moisture-resistant film may be fused to the panel. The moisture-resistant film may comprise a material selected from the group consisting of: high-impact polystyrene, polyethylene, and ABS (Acrylonitrile Butadiene Styrene).

Each of the plurality of pedestals may have a single wall.

The panel may comprise expanded polystyrene (EPS).

The hardboard layer and the panel may be attached to each other with glue.

The intersecting grooves may be rectangular. The walls of the intersecting grooves may have a height of about 15 millimetres to about 20 millimetres. The width of the intersecting grooves may be about 15 millimetres to about 20 millimetres.

The pedestals may be shaped as circles, ellipses, rectangles, diamonds, squares and/or hexagons.

The hardboard layer may comprise material selected from the group consisting of: OSB (oriented strand board), plywood, fiber cement board, cement board, metal sheeting, and magnesium oxide board.

The subfloor component may be shaped to connect to another subfloor component. The hardboard layer may comprise a tongue/groove configuration for connecting to another hardboard layer of another subfloor component.

The pedestals may be generally uniformly distributed across the first surface of the panel.

The hardboard layer may include a groove that is open along a side-facing surface of the hardboard layer, further comprising: a connector dimensioned to insert into the groove. The connector may comprise: a central body; and wings extending outwards from the central body, wherein each wing is dimensioned to be inserted into a respective groove in a hardboard layer of a subfloor component. Each wing may be dimensioned to frictionally engage the interior of a respective groove. Barbs may extend from each wing for frictionally engaging the interior of the respective groove.

According to another aspect, there is provided a method of manufacturing a subfloor component, comprising: providing a mold configured to form an insulating foam panel, the mold including pedestal-forming structures for forming the panel to have, in cross-section, a plurality of pedestals with walls that extend into the panel from a first face of the panel toward a second opposing face of the panel; placing a moisture-resistant film into the mold adjacent to the pedestal-forming structures; placing heat-expandable beads into the mold against the moisture-resistant film opposite the pedestal-forming structures; applying heat to the mold to expand the heat-expandable beads to form the panel, wherein the expansion of the heat-expandable beads causes both the film and the expanding beads to enter into and conform to the pedestal-forming structures thereby to form the pedestals of the panel with the moisture-resistant film fused thereto; removing the panel with the fused moisture-resistant film from the mold; and attaching a hardboard layer to the second face of the panel.

Having the beads and the film in the mold at the same time provides the opportunity for the film to fuse to the panel while the panel itself is being formed, and also causes the film to tightly conform to the pedestals at the same time. Providing fusing and conforming at the same time as panel formation is advantageous for expediting and simplifying the manufacturing of the subfloor component.

The heat-expandable beads may be expandable polystyrene (EPS) beads. The moisture-resistant film may comprise a material selected from the group consisting of: high-impact polystyrene, polyethylene, and ABS (Acrylonitrile Butadiene Styrene).

Attaching the hardboard layer may comprise applying adhesive to one or both of the hardboard layer and the second face of the panel.

The hardboard layer may comprise material selected from the group consisting of: OSB (oriented strand board), plywood, fiber cement board, cement board, metal sheeting, and magnesium oxide board.

The method may further comprise shaping the hardboard layer with a tongue/groove configuration for connecting to another hardboard layer of another subfloor component.

According to another aspect, there is provided a method of manufacturing a subfloor component, comprising providing a mold configured to form an insulating foam panel, the mold including pedestal-forming structures for forming the panel to have, in cross-section, a plurality of pedestals with walls that extend into the panel from a first face of the panel toward a second opposing face of the panel; placing heat-expandable beads into the mold; applying heat to the mold to expand the heat-expandable beads to form the panel with the pedestals; placing a moisture-resistant film adjacent to the pedestals; applying heat to fuse the film to at least the pedestals; and attaching a hardboard layer to the second face of the panel.

Placing the moisture-resistant film adjacent to the pedestals may comprise placing the moisture-resistant film within the mold adjacent to the pedestals, and the applying heat to fuse the film to at least the pedestals may comprise applying heat to the mold to fuse the film to at least the pedestals.

The heat-expandable beads may be expandable polystyrene (EPS) beads. The moisture-resistant film may comprise a material selected from the group consisting of: high-impact polystyrene, polyethylene, and ABS (Acrylonitrile Butadiene Styrene).

Attaching the hardboard layer may comprise applying adhesive to one or both of the hardboard layer and the second face of the panel.

The hardboard layer may comprise material selected from the group consisting of: OSB (oriented strand board), plywood, fiber cement board, cement board, metal sheeting, and magnesium oxide board.

The method may further comprise shaping the hardboard layer with a tongue/groove configuration for connecting to another hardboard layer of another subfloor component.

The method may further comprise shaping the hardboard layer with at least one groove.

These together with other aspects and advantages, which will be subsequently apparent, reside in the details of construction and operation as more fully hereinafter described and claimed, reference being had to the accompanying drawings forming a part hereof, wherein like numerals refer to like parts throughout.

### Brief Description of the Drawings

Embodiments will now be described more fully with reference to the accompanying drawings in which:

Figure 1 is a perspective view of the underside of a subfloor component;

Figure 2 is a bottom view of the subfloor component of Figure 1;

Figure 3 is a side view of the subfloor component of Figure 1;

Figure 4 is an end view of the subfloor component of Figure 1;

Figure 5 is a top view of the subfloor component of Figure 1;

Figure 6 is a perspective view of the underside of another embodiment of a subfloor component;

Figure 7 is a bottom view of the subfloor component of Figure 6;

Figure 8 is a side view of the subfloor component of Figure 6;

Figure 9 is an end view of the subfloor component of Figure 6;

Figure 10 is a top view of the subfloor component of Figure 6;

Figure 11 is a bottom view of another embodiment of a subfloor component;

Figure 12 is a side view of the subfloor component of Figure 11;

Figure 13 is an end view of the subfloor component of Figure 11;

Figure 14 is a top view of the subfloor component of Figure 11;

Figure 15 is a bottom view of another embodiment of a subfloor component;

Figure 16 is a side view of the subfloor component of Figure 15;

Figure 17 is an end view of the subfloor component of Figure 15;

Figure 18 is a top view of the subfloor component of Figure 15;

Figure 19 is a bottom view of another embodiment of a subfloor component;

Figure 20 is a side view of the subfloor component of Figure 19;

Figure 21 is an end view of the subfloor component of Figure 19;

Figure 22 is a top view of the subfloor component of Figure 19;

Figure 23 is a bottom view of another embodiment of a subfloor component;

Figure 24 is a side view of the subfloor component of Figure 22;

Figure 25 is an end view of the subfloor component of Figure 22;

Figure 26 is a top view of the subfloor component of Figure 22;

Figure 27 is a bottom view of another embodiment of a subfloor component;

Figure 28 is a side view of the subfloor component of Figure 27;

Figure 29 is an end view of the subfloor component of Figure 28;

Figure 30 is a top view of the subfloor component of Figure 29;

Figure 31 is a bottom view of another embodiment of a subfloor component;

Figure 32 is a side view of the subfloor component of Figure 31;

Figure 33 is an end view of the subfloor component of Figure 31;

Figure 34 is a top view of the subfloor component of Figure 31.

Figure 35 is a perspective view of a moisture-resistant film layer being placed against pedestal-forming structures that are within one of the components of a mold structure during manufacture of the subfloor component of Figure 1;

Figure 36 is a perspective view of expandable polystyrene beads being poured into the mold structure atop the moisture-resistant film layer;

Figure 37 is a perspective view of a mold structure being closed prior to applying heat to the mold;

Figure 38 is a cutaway view of the end of the mold structure enclosing the moisture-resistant film layer and the expandable polystyrene beads while the mold structure is being heated;

Figure 39 is a perspective view of the insulating foam panel having been formed with pedestals within the mold and the moisture-resistant film layer fused to the panel's pedestals;

Figure 40 is a perspective view of the hardboard layer being aligned with the face of the insulating foam panel that is opposite to the panel's pedestals; and

Figure 41 is a perspective view of the subfloor component having been formed;

Figure 42 is a flowchart of steps in a method for manufacturing a subfloor component;

Figure 43 is a flowchart of steps in an alternative method for manufacturing a subfloor component; and

Figure 44 is a sectional end view of a connector for connecting adjacent subfloor components.

### Detailed Description of the Embodiments

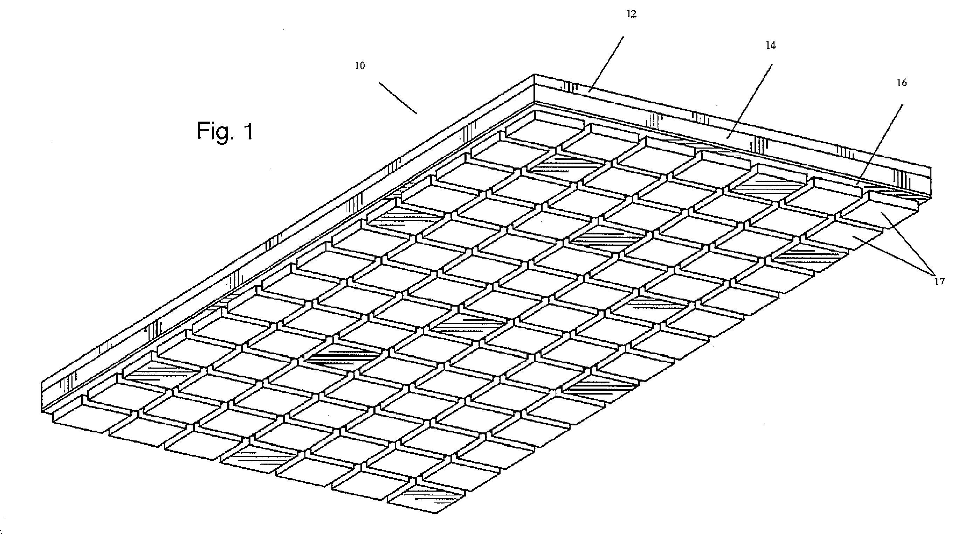

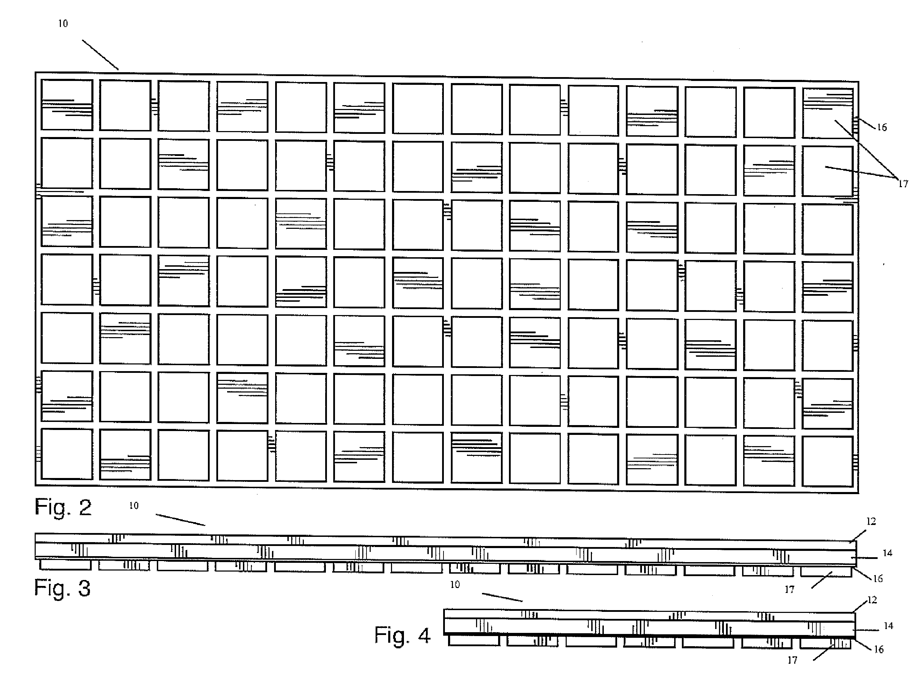

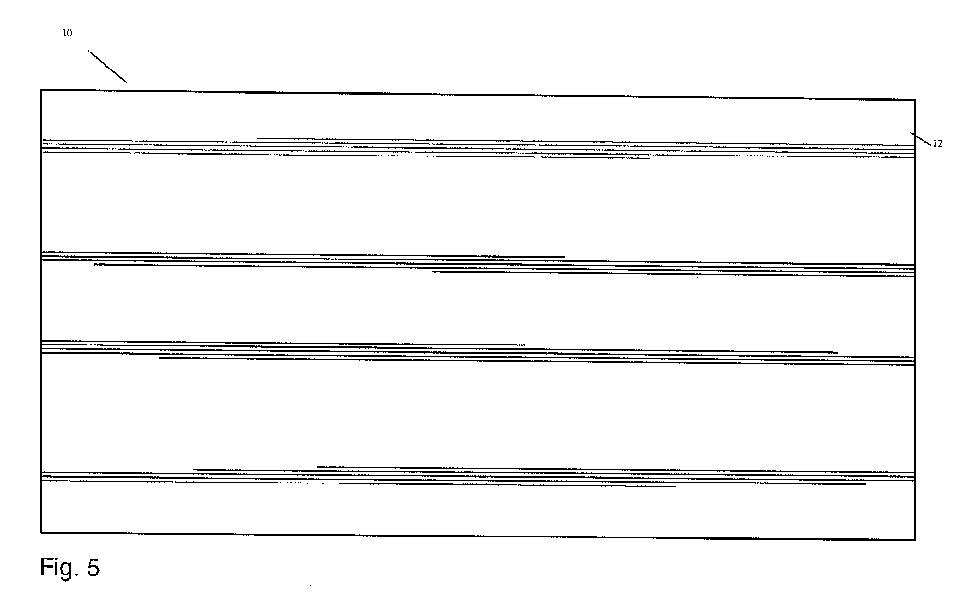

In Figures 1 through 5, there is shown a subfloor component 10 according to an embodiment. Subfloor component 10 is rectangular in shape, and includes a hardboard panel 12, an insulating foam panel 14, and a moisture-resistant film 16. The insulating foam panel 14 includes first and second opposing faces. Multiple intersecting grooves in the first face define, in cross-section, multiple pedestals 17 that have walls that extend into the insulating foam panel 14 from the first face toward the second face. The moisture-resistant film 16 is attached to the first face of the panel and conforms to the pedestals 17. The hardboard layer 12 is on the second face of the panel, which is opposite the panel 14 from the first face.

In this embodiment, the hardboard panel 12 is oriented strand board (OSB), a material well-known to be employed in building construction. Also in this embodiment, the insulating foam panel 14 is formed of expanded polystyrene (EPS), and the hardboard panel 12 is glued to the insulating foam panel 14. Furthermore, in this embodiment the moisture-resistant film 16 is a thin layer of high-impact polystyrene.

In this embodiment, the moisture-resistant film 16 is fused to the insulating foam panel 14 such that the moisture-resistant film 16 is affixed to the top and wall of the pedestals 17 as well as to the bottom of the grooves. The subfloor component 10 is to be placed on a foundation floor or other such structure with the pedestals 17 downwards and with the moisture-resistant film 16 between the insulating foam layer 14 and the foundation floor. Moisture on the foundation floor is able to pass between the pedestals 17 and can contact the moisture-resistant film 16 in order to drain away from underneath the subfloor component 10. The moisture-resistant film layer 16 effectively resists the passage of moisture into the insulating foam panel 14 from the foundation floor thereby keeping the insulating foam panel 14 suitably dry.

The fusing of the moisture-resistant film 16 and the insulating foam panel 14 enables the pedestals 17 to which the moisture-resistant film is conforming to have increased resistance to breakage. As would be understood, as useful as expanded EPS is for insulation, it can be brittle. In this embodiment, the pedestals 17, which are shaped as squares, each have four (4) walls meeting at four (4) edges and four (4) top corners. Particularly the top corners and also the edges are most prone to being broken away during transportation, installation, or usage. The present inventor has discovered that, particularly for a subfloor component 10 that will be experiencing various physical pressures from above, advantages are gained by employing a moisture-resistant film 16 that not only resists moisture reaching the insulating foam panel 16 but conforms to the pedestals in order to provide drainage and also increase the structural integrity of the pedestals 17. In this way, physical pressures both during construction (workers, wheel barrows, other machinery) and when construction is complete (home owners, employees, couches, filing cabinets etc.) can be better withstood by the pedestals 17.

In this embodiment, the walls of the intersecting grooves have a height of about 15 millimetres, giving the pedestals 17 a corresponding height. However, other heights are possible. For example, other embodiments may provide heights of between about 15 millimetres to about 20 millimetres. Furthermore, in this embodiment, the intersecting grooves have a width of about 15 millimetres, giving the pedestals 17 a corresponding spacing. However, other widths are possible. For example, other embodiments may provide widths of between about 15 millimetres to about 20 millimetres. It will be understood that having all grooves have the same width is not required.

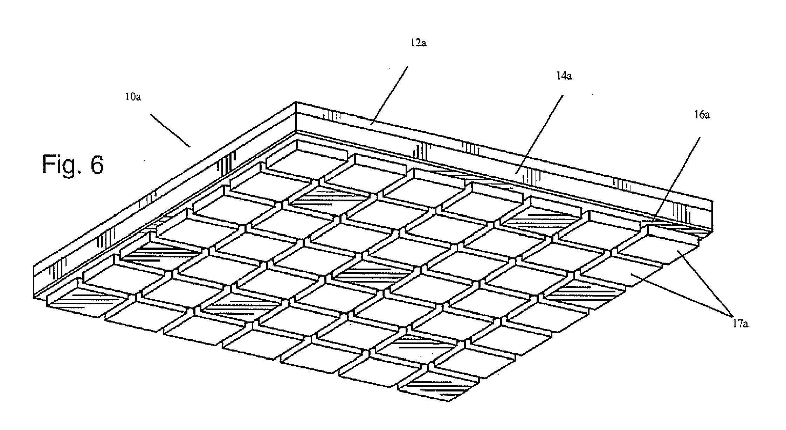

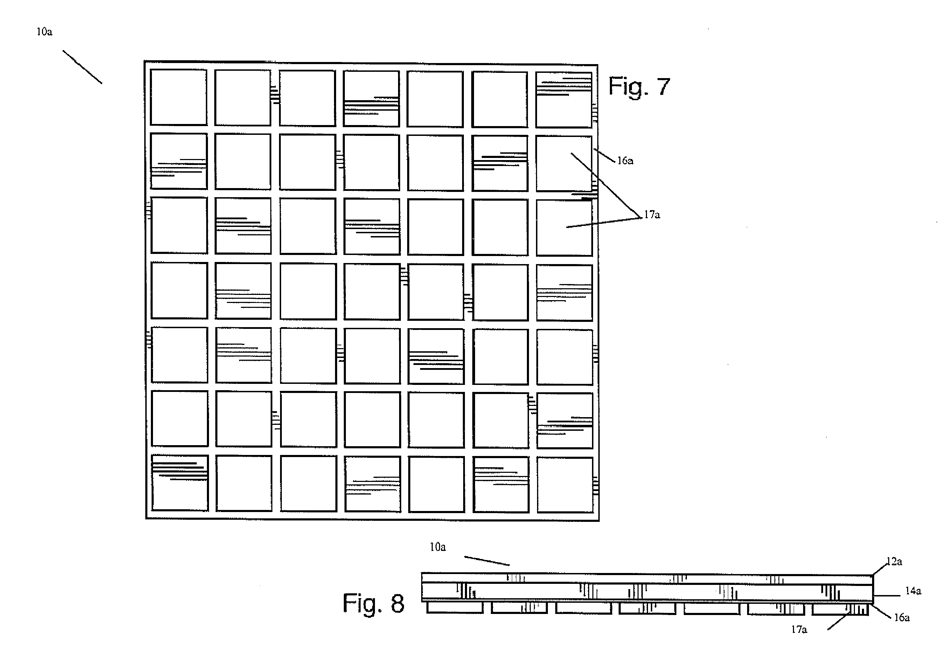

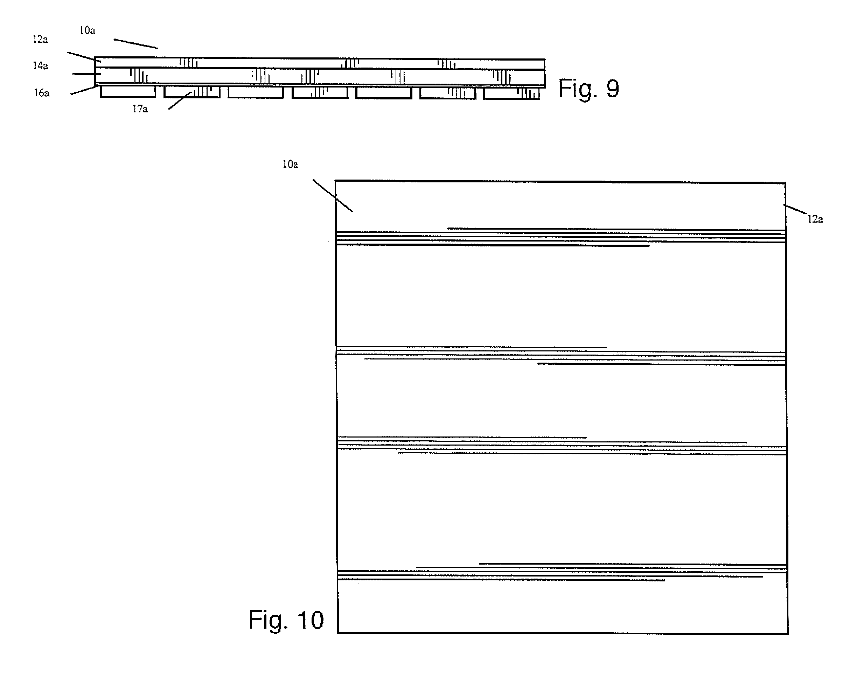

While the above-described subfloor component 10 can be useful for many purposes, the present inventor has also developed additional embodiments. For example, Figures 6 through 10 show a subfloor component 10a according to another embodiment. Subfloor component 10a is square in shape, and includes a hardboard panel 12a, an insulating foam panel 14a, and a moisture-resistant film 16a. Like the embodiment described in Figures 1 through 5, the insulating foam panel 14a includes first and second opposing faces. Multiple intersecting grooves in the first face define, in cross-section, multiple pedestals 17a that have walls that extend into the insulating foam panel 14a from the first face toward the second face. The moisture-resistant film 16a is attached to the first face of the panel and conforms to the pedestals 17a. The hardboard layer 12a is on the second face of the panel, which is opposite the panel 14a from the first face. As can be seen, subfloor component 10a is similar to subfloor component 10, but is square instead of rectangular.

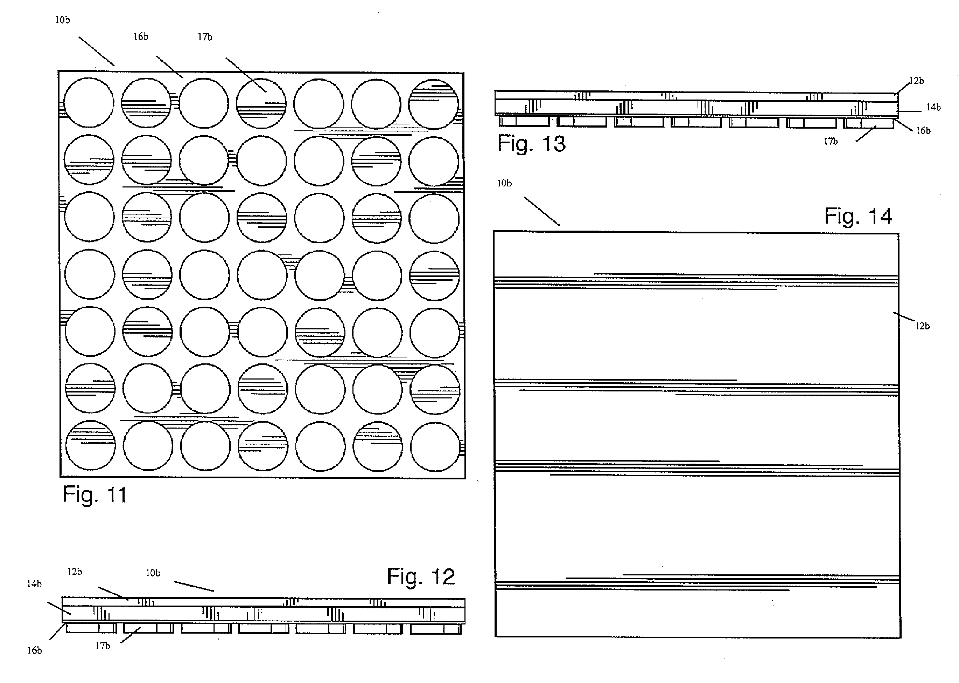

Figures 11 through 14 show a subfloor component 10b according to another embodiment. Subfloor component 10b is square in shape, and includes a hardboard panel 12b, an insulating foam panel 14b, and a moisture-resistant film 16b. Like the embodiment described in Figures 1 through 5, the insulating foam panel 14b includes first and second opposing faces. Multiple intersecting grooves in the first face define, in cross-section, multiple pedestals 17b that have walls that extend into the insulating foam panel 14b from the first face toward the second face. The moisture-resistant film 16b is attached to the first face of the panel and conforms to the pedestals 17b. The hardboard layer 12b is on the second face of the panel, which is opposite the panel 14b from the first face. As can be seen, subfloor component 10b is similar to subfloor component 10, but is square instead of rectangular. Furthermore, each of the pedestals 17b are circular, rather than square. The pedestals 17b being circular means that each pedestal 17b only has one wall, and thus there are no top corners. Because pedestal 17b does not have any top corners, breakage due to handling or use of the subfloor component 10b is even less likely.

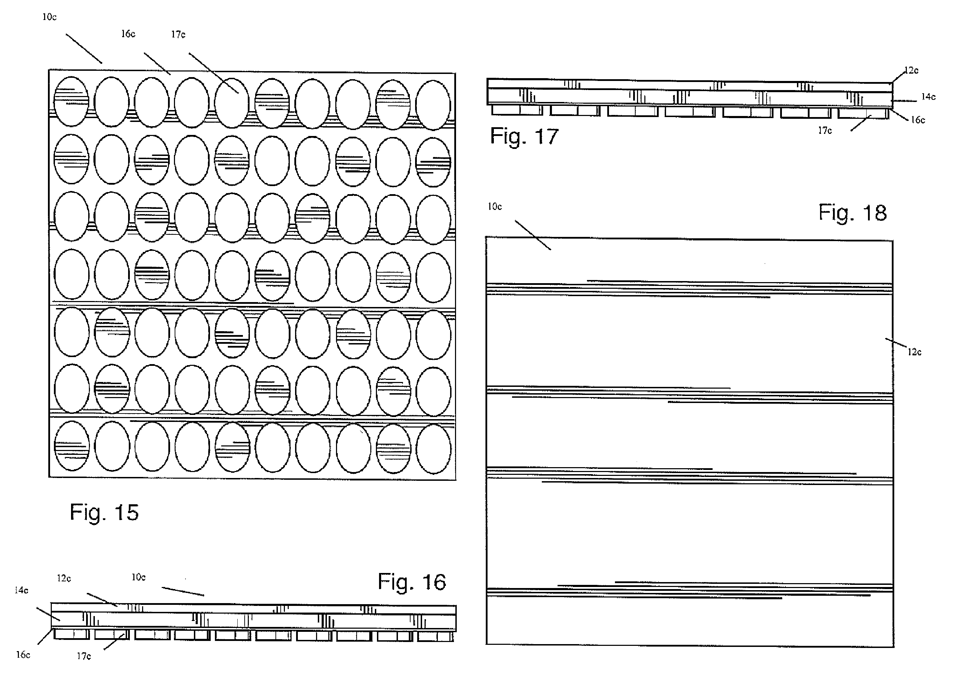

Figures 15 through 18 show a subfloor component 10c according to another embodiment. Subfloor component 10c is square in shape, and includes a hardboard panel 12c, an insulating foam panel 14c, and a moisture-resistant film 16c. Like the embodiment described in Figures 1 through 5, the insulating foam panel 14c includes first and second opposing faces. Multiple intersecting grooves in the first face define, in cross-section, multiple pedestals 17c that have walls that extend into the insulating foam panel 14c from the first face toward the second face. The moisture-resistant film 16c is attached to the first face of the panel and conforms to the pedestals 17c. The hardboard layer 12c is on the second face of the panel, which is opposite the panel 14c from the first face. As can be seen, subfloor component 10c is similar to subfloor component 10, but is square instead of rectangular. Furthermore, each of the pedestals 17c are oval-shaped, rather than square. The pedestals 17c being oval-shaped means that each pedestal 17c only has one wall, and thus there are no top corners. Because pedestal 17c does not have any top corners, breakage due to handling or use of the subfloor component 10c is less likely.

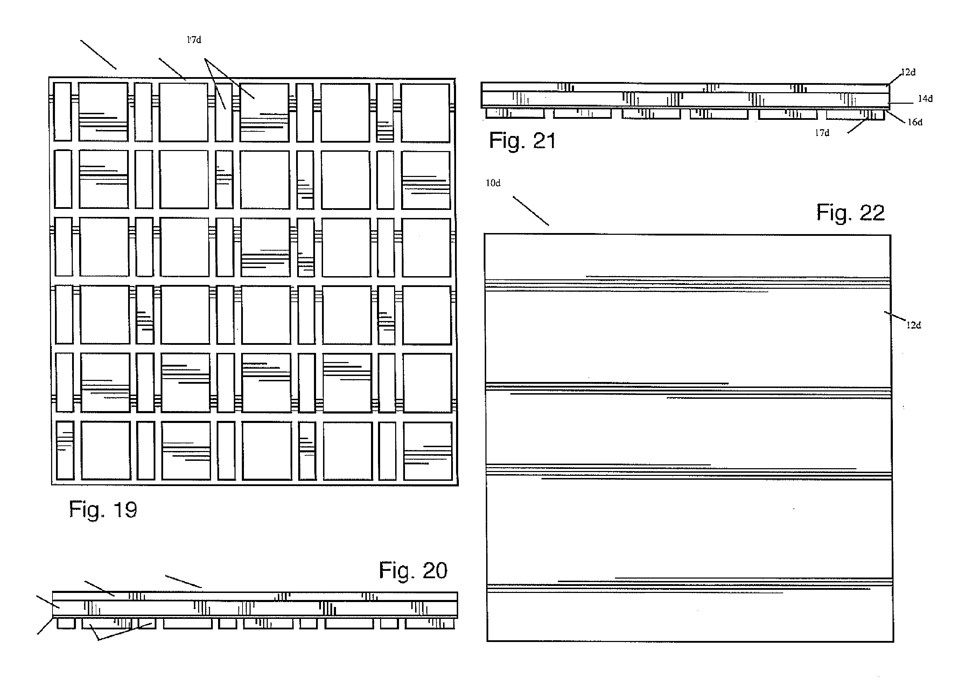

Figures 19 through 22 show a subfloor component 10d according to another embodiment. Subfloor component 10d is square in shape, and includes a hardboard panel 12d, an insulating foam panel 14d, and a moisture-resistant film 16d. Like the embodiment described in Figures 1 through 5, the insulating foam panel 14d includes first and second opposing faces. Multiple intersecting grooves in the first face define, in cross-section, multiple pedestals 17d that have walls that extend into the insulating foam panel 14d from the first face toward the second face. The moisture-resistant film 16d is attached to the first face of the panel and conforms to the pedestals 17d. The hardboard layer 12a is on the second face of the panel, which is opposite the panel 14d from the first face. As can be seen, subfloor component 10d is similar to subfloor component 10, but is square instead of rectangular. Furthermore, there are two different sizes of pedestals 17d, namely a thin rectangle and a thick rectangle.

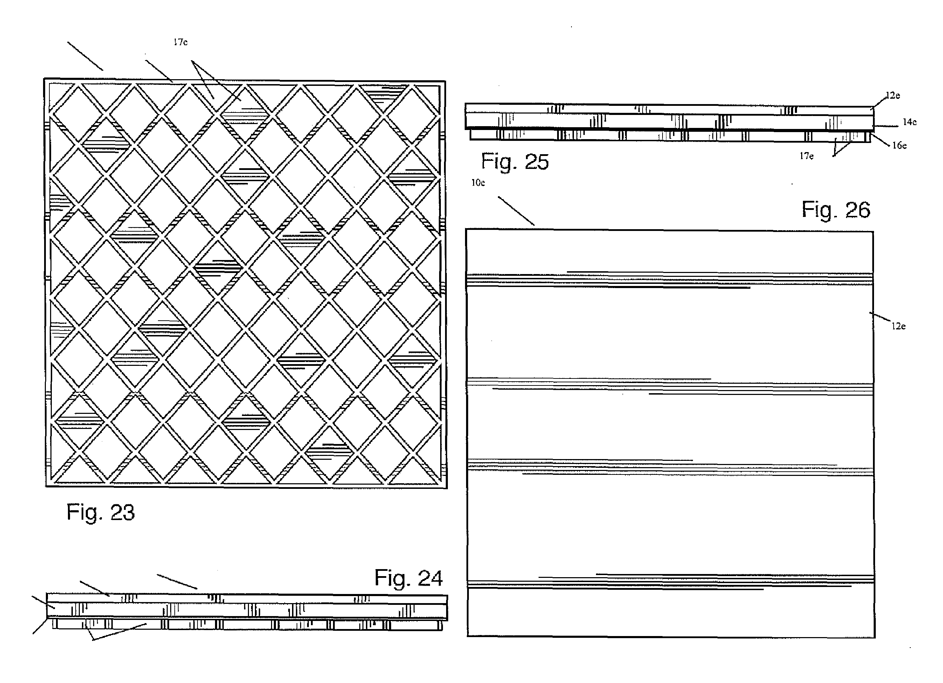

Figures 23 through 26 show a subfloor component 10d according to another embodiment. Subfloor component 10e is square in shape, and includes a hardboard panel 12e, an insulating foam panel 14e, and a moisture-resistant film 16e. Like the embodiment described in Figures 1 through 5, the insulating foam panel 14e includes first and second opposing faces. Multiple intersecting grooves in the first face define, in cross-section, multiple pedestals 17e that have walls that extend into the insulating foam panel 14e from the first face toward the second face. The moisture-resistant film 16e is attached to the first face of the panel and conforms to the pedestals 17e. The hardboard layer 12e is on the second face of the panel, which is opposite the panel 14e from the first face. As can be seen, subfloor component 10e is similar to subfloor component 10, but is square instead of rectangular. Furthermore, the pedestals 17e are diamond-shaped.

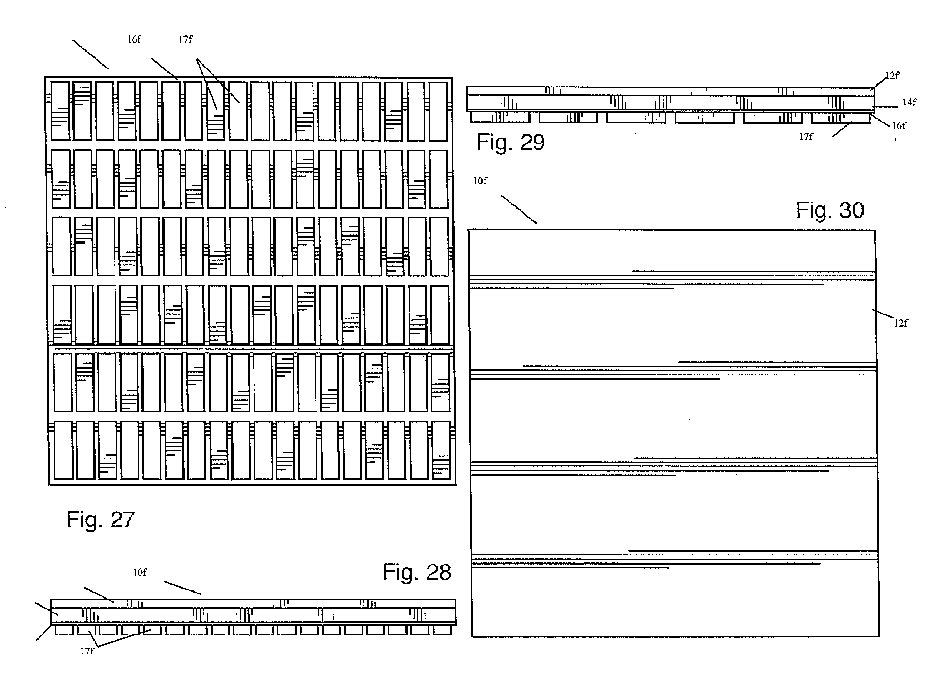

Figures 27 through 30 show a subfloor component 10f according to another embodiment. Subfloor component 10f is square in shape, and includes a hardboard panel 12f, an insulating foam panel 14f, and a moisture-resistant film 16f. Like the embodiment described in Figures 1 through 5, the insulating foam panel 14f includes first and second opposing faces. Multiple intersecting grooves in the first face define, in cross-section, multiple pedestals 17f that have walls that extend into the insulating foam panel 14f from the first face toward the second face. The moisture-resistant film 16f is attached to the first face of the panel and conforms to the pedestals 17f. The hardboard layer 12f is on the second face of the panel, which is opposite the panel 14f from the first face. As can be seen, subfloor component 10f is similar to subfloor component 10, but is square instead of rectangular. Furthermore, the pedestals 17f are all rectangles.

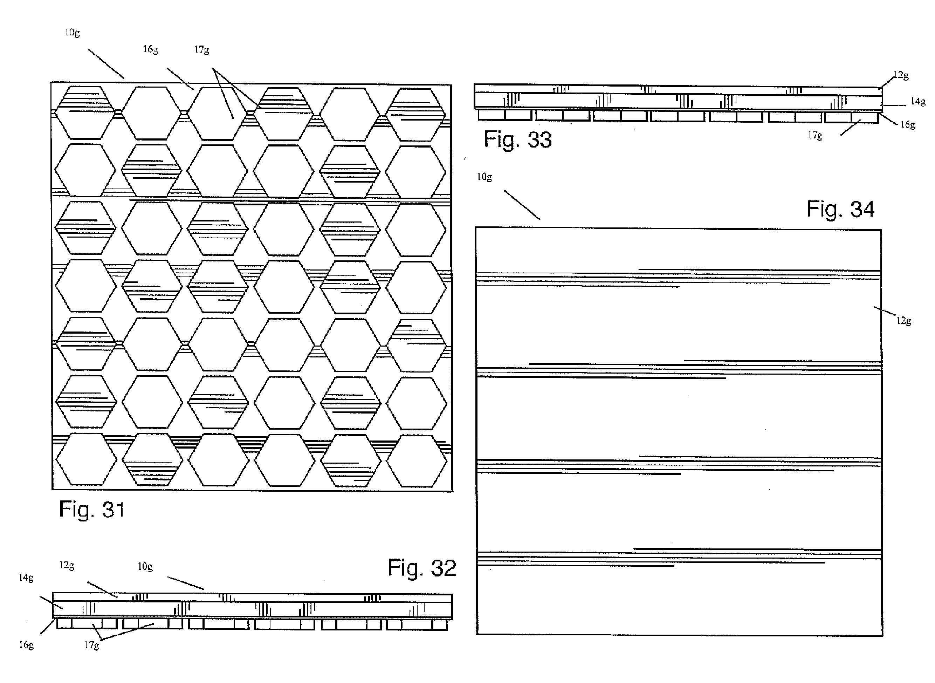

Figures 31 through 34 show a subfloor component 10g according to another embodiment. Subfloor component 10g is square in shape, and includes a hardboard panel 12g, an insulating foam panel 14g, and a moisture-resistant film 16g. Like the embodiment described in Figures 1 through 5, the insulating foam panel 14g includes first and second opposing faces. Multiple intersecting grooves in the first face define, in cross-section, multiple pedestals 17g that have walls that extend into the insulating foam panel 14g from the first face toward the second face. The moisture-resistant film 16g is attached to the first face of the panel and conforms to the pedestals 17g. The hardboard layer 12g is on the second face of the panel, which is opposite the panel 14g from the first face. As can be seen, subfloor component 10g is similar to subfloor component 10, but is square instead of rectangular. Furthermore, the pedestals 17g are all hexagons.

It will be understood that a subfloor component with pedestals of different shapes, including others not disclosed above, or mixtures of differently-shaped pedestals such as those described above, may be provided.

The various subfloor components described herein may generally be used alongside each other in a particular installation, provided that the overall thicknesses of two different panels are similar, and provided that using differently-shaped pedestals in two different subfloor components does not unduly impede the flow of moisture beneath the subfloor components. In one embodiment, the hardboard layer of adjacent subfloor components have tongue and groove configurations along the edges which abut against each other, such that the tongue of one panel can be received within the groove of the adjacent panel. The tongues/grooves may have square, rectangular configurations with or without rounded distal corners.

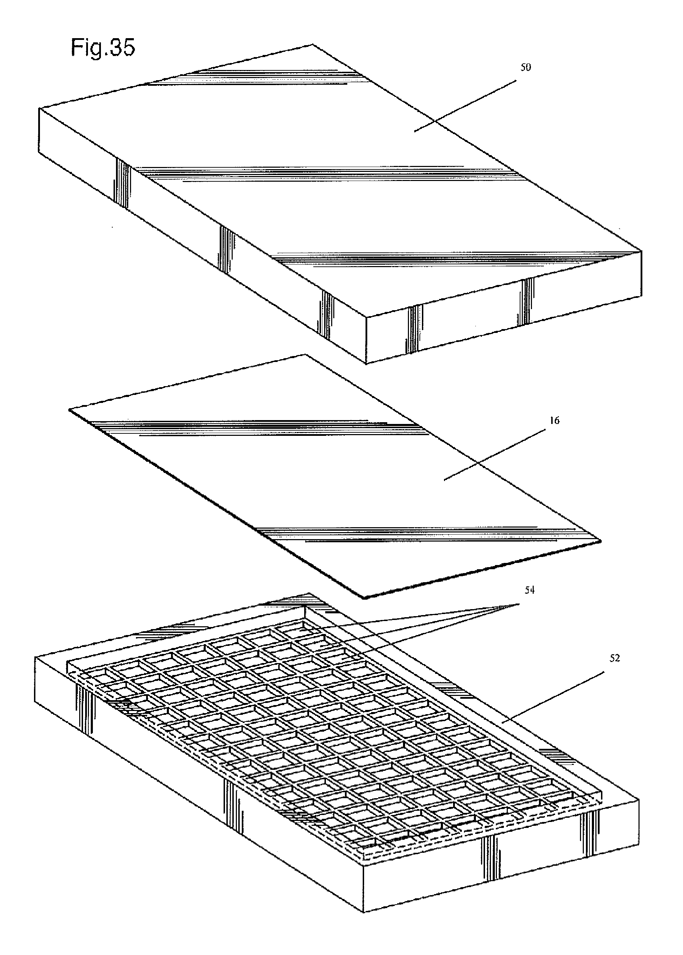

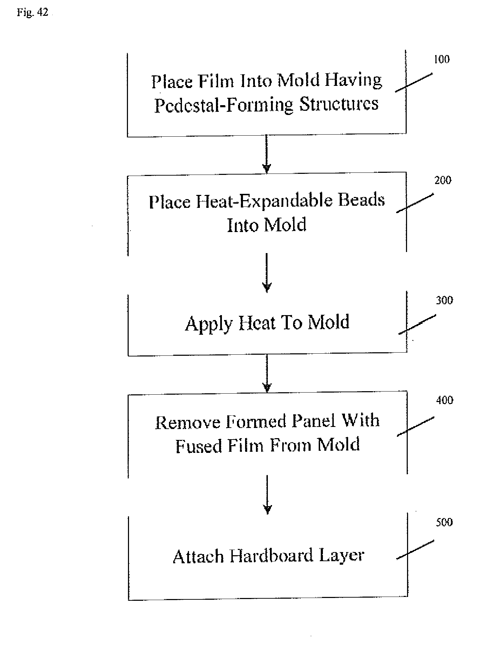

Figure 42 shows a flowchart of steps of a method of manufacturing a subfloor component such as subfloor component 10 described above. The treatment of the materials involved in the steps are illustrated in Figures 35 through 41. In Figure 35, a mold structure is shown have a top portion 50 and a bottom portion 52. It will be understood that the terms top and bottom may be interchanged with left and right, for example, in the case of a mold structure that stands vertically.

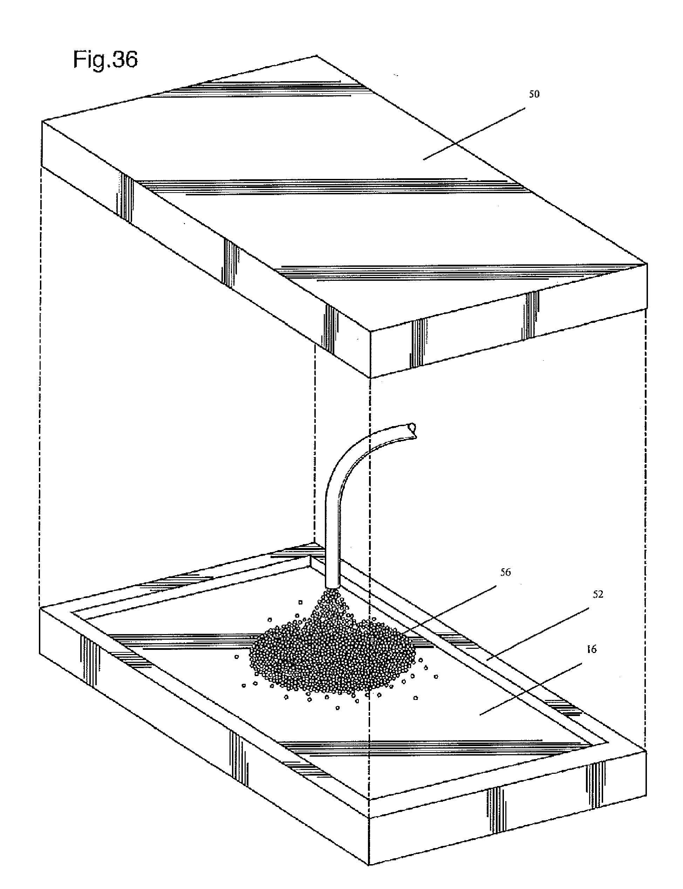

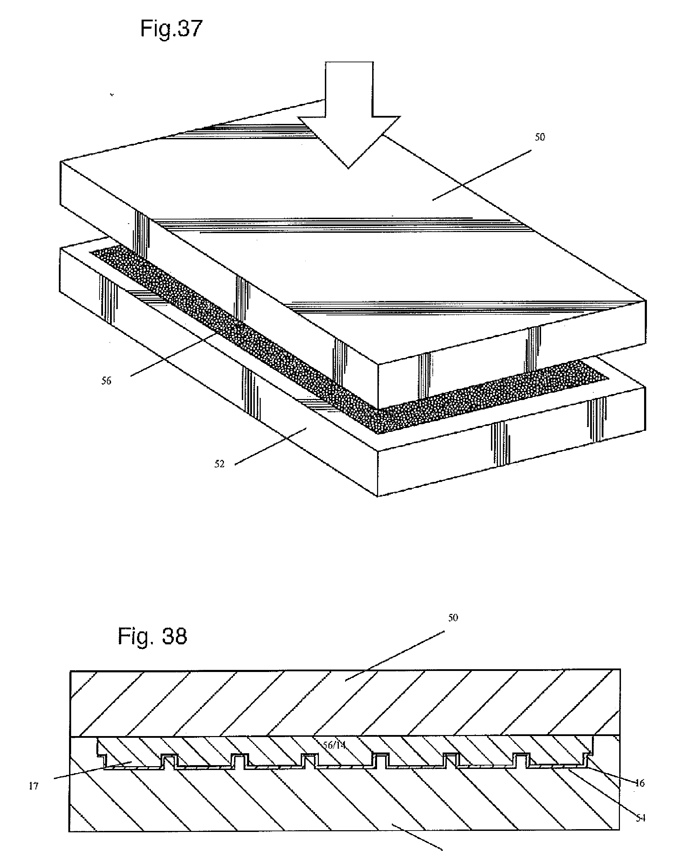

First, a generally-flat piece of moisture-resistant film 16 is placed within the bottom portion 52 of the mold structure on top of and therefore adjacent to pedestal-forming structures 54 (step 100), as shown in Figure 35. The pedestal forming structures 52 are part of the mold structure and have a shape corresponding to the shape of the desired pedestals 17. With the moisture-resistant film 16 adjacent to the pedestal-forming structures 54, heat-expandable beads 56 are then placed into the mold structure on top of the moisture-resistant film 16 (step 200), as shown in Figure 36. The heat-expandable beads are thus placed against a side of the moisture-resistant film 16 that is opposite the pedestal forming structures 54. As shown in Figure 37, with the moisture-resistant film 16 and the heat-expandable beads 56 within the mold structure between top 50 and bottom 52 portions, the mold structure is then closed. At this point, heat is then applied to the mold structure (step 300) so as to cause the heat-expandable beads 56 to expand and fuse together. While the heat-expandable beads 56 are expanding to form the insulating foam panel 14, the pressure of the expansion causes both the moisture-resistant film 16 and the expanding beads 56 to enter into and conform to the pedestal-forming structures 54, as shown in the cutaway view of Figure 38. The moisture-resistant film being of high-impact polystyrene fuses at its surface under the applied heat to the facing surface of the insulating foam panel 14 being formed.

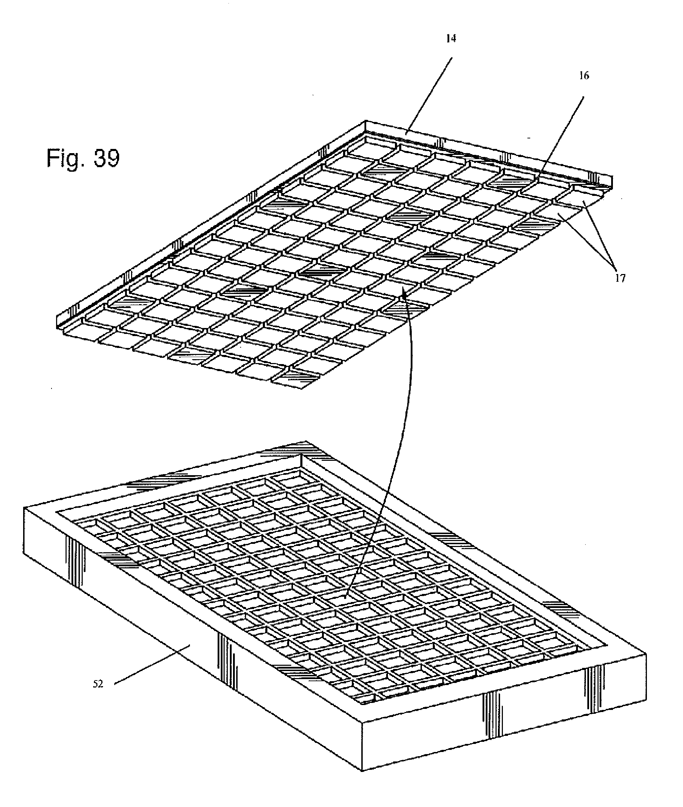

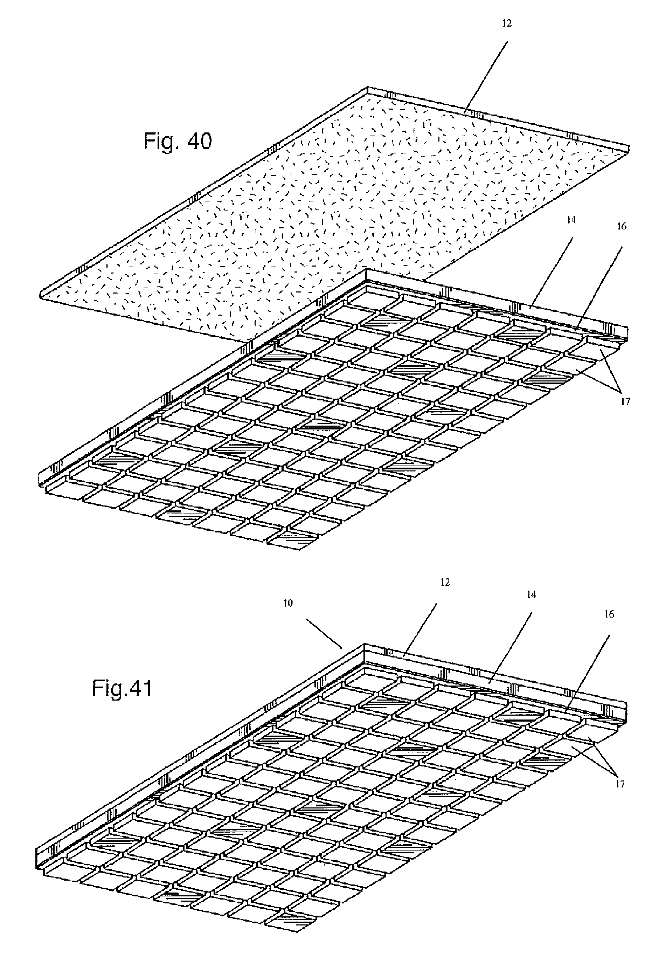

With the insulating foam panel 14 having been formed with pedestals 17 and having been fused to moisture-resistant film 16, as shown in Figure 39, the combination is then removed from the mold structure (step 400). As shown in Figures 40 and 41, the hardboard layer 12 is then adhered to the combination that was removed from the mold structure (step 500), thereby to form the subfloor component 10.

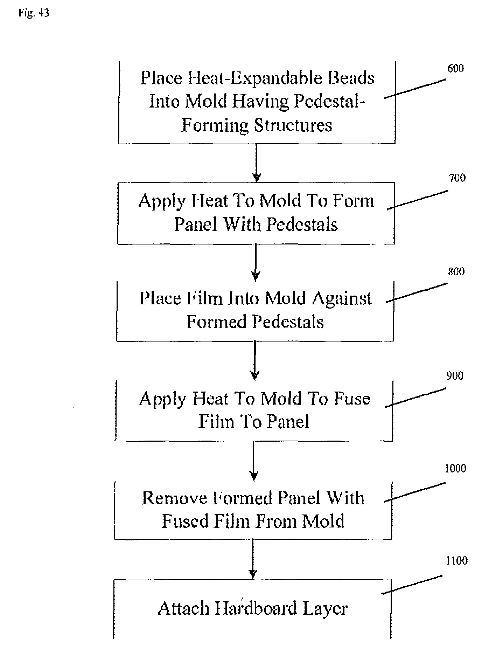

Figure 43 shows a flowchart of steps of an alternative method of manufacturing a subfloor component such as subfloor component 10 described above. This method is similar to the method described above, and can be implemented so as to use the same mold structure as described above. However, the method differs in that the film is placed into the mold after the foam panel is formed, and the film is then fused to the formed panel, rather than fused to the panel while the panel is being formed. Turning to Figure 43, heat-expandable beads 56 are placed within the bottom portion 52 of the mold structure on top of and within the pedestal-forming structures 54 (step 600). With the heat-expandable beads 56 inside the bottom portion 52 of the mold structure in this way, they are between top 50 and bottom 52 portions, and the mold structure is then closed. At this point, heat is then applied to the mold structure (step 700) so as to cause the heat-expandable beads 56 to expand and fuse together to form an insulating foam panel 14. While the heat-expandable beads 56 are expanding to form the insulating foam panel 14, the pressure of the expansion causes the expanding beads 56 to enter into and conform to the pedestal-forming structures 54.

With the insulating foam panel 14 having been formed with pedestals 17, the mold structure is opened and a generally-flat piece of moisture resistant film 16 is then placed within the bottom portion of the mold structure on top of and therefore adjacent to the pedestals 17 of the panel that has been formed (step 800). The mold is then closed again with both the moisture-resistant film 16 and the formed panel 14 inside. The pedestals 17 of the formed foam panel 14 press against the moisture-resistant film 16 so as to cause the moisture-resistant film 16 to enter into and conform to the pedestal-forming structures 54 of the mold structure. At this point, heat is then again applied to the mold structure (step 900) so as to cause the moisture-resistant film 16 to fuse at its surface under the applied heat to the facing surface of the insulating foam panel 14 that has been formed, in such a way that the moisture-resistant film 16 conforms to, and fuses to, the formed pedestals 17.

With the insulating foam panel 14 having been formed with pedestals 17 and the moisture-resistant film 16 having been fused to the foam panel 14, as shown in Figure 39, the combination is then removed from the mold structure (step 1000). The hardboard layer 12 is then adhered to the combination that was removed from the mold structure (step 1100), thereby to form the subfloor component 10.

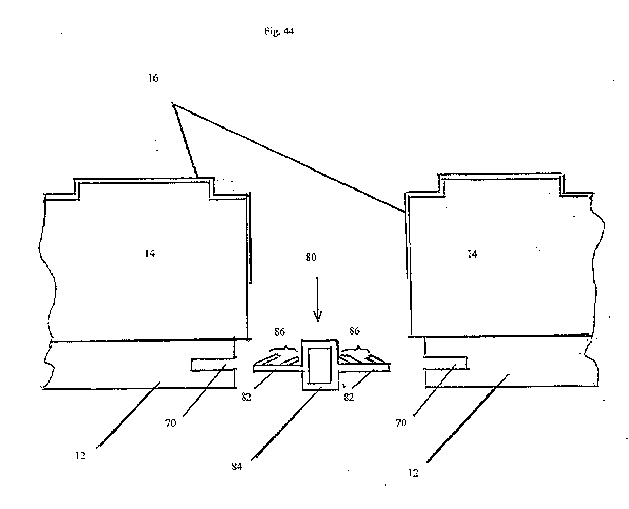

As discussed above, subfloor components 10 may be laid adjacent to each other on a concrete floor or other foundation as described above. This may be done without connecting the subfloor components 10 to each other. However, as discussed, advantages lie in connecting adjacent subfloor components 10 in some manner so as to resist movement of the adjacent subfloor components 10 relative to one another. Turning now to Figure 44, there is shown an elevational sectional end view of two subfloor components 10 having hardboard layers 12 each with a respective groove 70. Instead of a tongue/groove configuration, the grooves 70 have openings that face each other, and respective wings 82 of a separate connector 80 may be inserted into the grooves 70. The wings 82 of the connector 80 extend outward in opposite directions from a central body 84 of the connector 80. The central body 84 of the connector is rectangular in cross-section and, in this embodiment, the wings 82 and central body 84 have a length extending inwards (into the page, ie., along the floor). In this embodiment, barbs 86 extend from each of the wings 82 for frictionally engaging, or "gripping", the insides of the grooves 70 to help with resisting of sliding of the connector 80 relative to the subfloor components 10. While the barb configuration makes it easy for an installer to insert a connector into grooves, alternatively, the wings 82 may be dimensioned to have no barbs but simply to have a thickness that provides frictional engagement with the inside of the grooves.

The connector 80 may be made entirely of plastic, metal, or another suitable material, and may be a unitary device or be made of two or more interconnected pieces.

The length of the connector 80 may be less than, the same as, or greater than the corresponding length of a particular subfloor component 10. A connector 80 functions to align the hardboard layers 12 and thereby keep the adjacent subfloor components 10 into which it is inserted from shifting relative to each other thereby providing a more unitary subfloor, and generally on the same plane as each other. It will be noted that each of the ends of hardboard layers 12 are recessed slightly from the facing ends of the foam panels 14 so as to accommodate the central body 84 of the connector 80 in a way that permits the facing ends of the foam panels 14 to generally contact each other despite the insertion of the connector 80 between the hardboard layers 12. That is, each hardboard layer 12 is recessed an amount corresponding to half the thickness of the central body 84 of the connector 80.

In an alternative configuration, one of the hardboard layers 12 may be recessed an amount corresponding to the entire thickness of the central body 84 of the connector 80, rather than just half of the thickness, while the hardboard layer 12 that faces the recessed layer is not recessed at all with respect to its corresponding foam panel 14. In this way, the central body 84 of the connector 80 is accommodated entirely by the recession of one of the hardboard layers 12. Other configurations for accommodating a central body 84 are possible.

In another alternative configuration, a connector may be provided that has no central body 84 but that simply consists of wings 82 with barbs 86. With such a configuration, there may be a less rigid connection between hardboard layers 12. Advantageously, however, there would be no requirement for recession of one or both hardboard layers 12 to accommodate a central body in this case, and the hardboard layers 12 could therefore be arranged to contact each other in a manner such as is described above for adjacent facing ends of the foam panels 14.

The many features and advantages of the invention are apparent from the detailed specification and, thus, it is intended by the appended claims to cover all such features and advantages of the invention that fall within the true purpose of the invention. Further, since numerous modifications and changes will readily occur to those skilled in the art, it is not desired to limit the invention to the exact operation illustrated and described, and accordingly all suitable modifications and equivalents may be resorted to, falling within the purpose and scope of the invention.

For example, the moisture-resistant film may be made of other materials, such as polyethylene, or ABS (Acrylonitrile Butadiene Styrene). Furthermore, materials for the hardboard layer may be selected from plywood, fiber cement board, cement board, metal sheeting, and magnesium oxide board. Other materials, provided that they may be adhered to the insulating foam panel and provide a suitable amount of rigidity, may be employed for a hardboard layer.

Furthermore, while in the embodiments disclosed above the pedestals are generally uniformly distributed across the insulating foam panel, alternatives may be provided having pedestals that are not so uniformly distributed.

## Claims

1. A subfloor component comprising:
an insulating foam panel having first and second opposing faces and a plurality of intersecting grooves to define, in cross-section, a plurality of pedestals having walls that extend into the panel from the first face toward the second face;
a moisture-resistant film attached to the first face of the panel and that conforms to the pedestals; and
a hardboard layer on the second face of the panel.

2. The subfloor component of claim 1, wherein the moisture-resistant film is fused to the panel.

3. The subfloor component of claim 1 or 2, wherein the pedestals are generally uniformly distributed across the first surface of the panel.

4. The subfloor component of any one of claims 1 to 3, wherein the subfloor component is shaped to connect to another subfloor component.

5. The subfloor component of claim 4, wherein the hardboard layer comprises a tongue/groove configuration for connecting to another hardboard layer of another subfloor component.

6. The subfloor component of any one of claims 1 to 3, wherein the hardboard layer includes a groove that is open along a side-facing surface of the hardboard layer, and further comprising:
a connector dimensioned to insert into the groove.

7. The subfloor component of claim 6, wherein the connector comprises:
a central body; and
wings extending outwards from the central body, wherein each wing is dimensioned to be inserted into a respective groove in a hardboard layer of a subfloor component.

8. The subfloor component of claim 7, wherein each wing is dimensioned to frictionally engage the interior of the respective groove.

9. The subfloor component of claim 8, wherein barbs extend from each wing for frictionally engaging the interior of the respective groove.

10. A method of manufacturing a subfloor component, comprising:
providing a mold configured to form an insulating foam panel, the mold including pedestal-forming structures for forming the panel to have, in cross-section, a plurality of pedestals with walls that extend into the panel from a first face of the panel toward a second opposing face of the panel;
placing a moisture-resistant film into the mold adjacent to the pedestal-forming structures;
placing heat-expandable beads into the mold against the moisture-resistant film opposite the pedestal-forming structures;
applying heat to the mold to expand the heat-expandable beads to form the panel, wherein the expansion of the heat-expandable beads causes both the film and the expanding beads to enter into and conform to the pedestal-forming structures thereby to form the pedestals of the panel with the moisture-resistant film fused thereto;
removing the panel with the fused moisture-resistant film from the mold; and
attaching a hardboard layer to the second face of the panel.

11. A method of manufacturing a subfloor component, comprising:
providing a mold configured to form an insulating foam panel, the mold including pedestal-forming structures for forming the panel to have, in cross-section, a plurality of pedestals with walls that extend into the panel from a first face of the panel toward a second opposing face of the panel;
placing heat-expandable beads into the mold;
applying heat to the mold to expand the heat-expandable beads to form the panel with the pedestals;
placing a moisture-resistant film adjacent to the pedestals;
applying heat to fuse the film to at least the pedestals; and
attaching a hardboard layer to the second face of the panel.

12. The method of claim 11, wherein the placing the moisture-resistant film adjacent to the pedestals comprises placing the moisture-resistant film within the mold adjacent to the pedestals, and the applying heat to fuse the film to at least the pedestals comprises applying heat to the mold to fuse the film to at least the pedestals.

13. The method of claim 11 or 12, further comprising:
shaping the hardboard layer with a tongue/groove configuration for connecting to another hardboard layer of another subfloor component.

14. The method of claim 11 or 12, further comprising:
shaping the hardboard layer with at least one groove.

15. The method of any one of claims 10 to 14, wherein attaching the hardboard layer comprises applying adhesive to one or both of the hardboard layer and the second face of the panel.
